# EUROPEAN PATENT SPECIFICATION

(11) **EP 0 649 803 B1**
(45) Date of publication and mention of the grant of the patent: **11.02.1998**
(21) Application number: 94202748.3
(22) Date of filing: 22.09.1994
(51) Int. Cl.: B65G 15/20

(54) **Article-transporting apparatus**
Vorrichtung zum Fördern von Gegenständen
Appareil pour transporter des articles

(30) Priority: 22.10.1993 NL 9301839
(43) Date of publication of application: 26.04.1995
(73) Proprietor: BREDA PACKAGING B.V., NL-4815 CD Breda (NL)
(72) Inventor: Kempers, Johannes Cornelis, NL-4844 VA Terheijden (NL)
(74) Representative: Eveleens Maarse, Pieter

(56) References cited:
- WO-A-88/01976
- WO-A-92/09228
- US-A- 2 673 673
- PATENT ABSTRACTS OF JAPAN vol. 10, no. 211 (M-501) (2267) 24 July 1986 & JP-A-61 051 407 (MATSUSHITA ELECTRIC IND CO. LTD.) 13 March 1986
- PATENT ABSTRACTS OF JAPAN vol. 8, no. 274 (M-345) (1711) 14 December 1984 & JP-A-59 143 806 (SANSHIN SHIYOUKAI K.K.) 17 August 1984

## Description

The present invention relates to an apparatus for consequently transporting articles of predetermined dimensions, said apparatus comprising:
- a frame with at least two guides, at least one of which is rotatable;
- at least two conveyors each comprising:
   * an endless belt element;
   * at least two reversing wheels the parallel rotation axes of which coincide for the conveyors; and
   * a body supporting the upper part of the belt element, wherein at least one supporting body of said at least two conveyors is connected by means of displacing elements to said rotatable guide arranged parallel to the rotation axes of said reversing wheels to displace at least one of said at least two conveyors transversely of the transporting direction of said belt element upon rotation of said guide, and
- drive means for said belt elements and said rotatable guide.

An article transporting apparatus of the type described above is known from the Japanese patent application JP-A-6105407, where the distance between separate conveyors is adjusted by means of a connection of said conveyors to a guide with a screw thread. The conveyors are displaceable along the guides.

The known apparatus has the disadvantage, that displacement of the conveyors is limited to the extent, to which the guides are screw threaded. Also, the known apparatus has the disadvantage, that the conveyors are only arranged for displacement to or from each other, so that only two conveyors can be used in such a known device. If further support for an article, which is wide in comparison to the direction of transport, is necessary in case the distance between the conveyors has become large as a result of the dimensions of the article, no further support is provided, and neither are measures to position such a further support.

The present invention relates to an apparatus of the type described above, in which the disadvantages described above are obviated. According to the present invention this is achieved, in that said guide is rod-like and arranged for driving thereof to rotate, and that each displacement element comprises a housing for at least two rollers, said rollers each being arranged to roll over said guide upon rotation thereof, where a displacement along said guide resulting from said rotation is predetermined by means of the angle between rotation axes of rollers of one of said conveyors and a rotation axis of said guide.

With an apparatus according to the present invention possible displacement of the conveyors along a guide is not limited by screw thread along the length thereof, and exact positioning of the conveyors in relation to one another is achieved. Furthermore the apparatus according to the present invention is relatively simple and can be manufactured, practically without any additional cost compared with known apparatuses, but resulting in an apparatus with the advantages described above. Also adjustment of the apparatus according to the present invention with respect to the dimensions of an article to be transported is achieved, with no lack of support for articles to be transported.

In the dependent claims measures are described for obtaining preferred embodiments.

These and other advantages of the invention are further elucidated with reference to the figure description hereinbelow of an embodiment of the invention. In the drawing:
fig. 1 shows a perspective view of an apparatus according to the invention;
fig. 2 shows a perspective view of a part of the apparatus in fig. 1;
fig. 3 is a perspective view of another part of the apparatus in fig. 1; and
fig. 4 shows partly in cross section a view of yet another part of the apparatus in fig. 1.

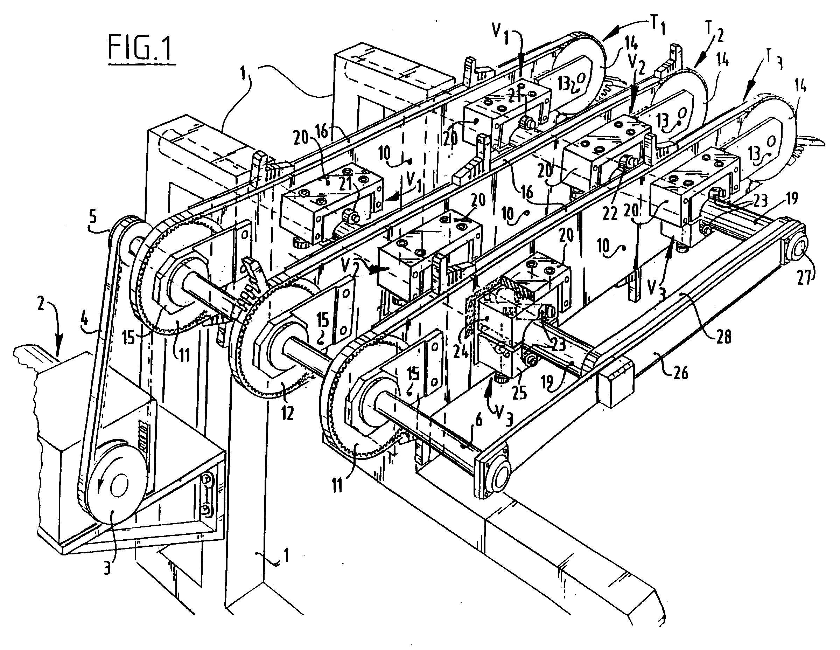

The embodiment shown in fig. 1 of an apparatus according to the invention comprises: a frame 1; a motor 2; a drive shaft 6; two guides 19; a coupling plate 26; and three conveyors T1, T2 and T3, each of which comprises: a narrow endless conveyor belt 16 having fixed thereto L-shaped bodies 17; a supporting body 10; a driven reversing wheel 11 or 12 and a free-turning reversing wheel 14; an adjustable mounting plate 13 and a fixed mounting plate 15; and two displacing elements V1, V2 or V3 in the case of transporter T1, T2 or T3 respectively. Each displacing element comprises: a housing formed by an upper part 24 and a closing part 25; and six rollers 21, 22 or 23 in the case of transporter T1, T2 or T3 respectively.

Motor 2 is fixed to frame 1 and, using the reversing wheel 3, drives the drive belt 4, which drives the drive wheel 5 fixed to the drive shaft 6, the drive shaft 6 and the reversing wheels 11 and 12 coupled to drive shaft 6. The narrow endless conveyor belts 16 have an inner surface co-acting with the driven reversing wheels 11 and 12 and are therefore moved round by the driven reversing wheels 11 and 12. The conveyor belts 16 travel round the supporting bodies 10 and round the free-turning reversing wheels 14. For protection of the conveyor belts a layer (not shown) of wear-resistant material is arranged on their inner surface. L-shaped bodies are arranged on the narrow endless conveyor belts 16 of the outer conveyors T1 and T3, which bodies are formed by a leg 17 and a protrusion 18 fixed to the leg 17. These L-shaped bodies push forward the trailing side of an article to be transported. Arranged on the narrow endless conveyor belt 16 of the middle conveyor T2 are similar L-shaped bodies engaging the leading side of an article to be transported such that during transport over the apparatus an article to be transported is clamped between the various L-shaped bodies.

The driven reversing wheel 12 of the middle conveyor T2 is mounted detachably to the drive shaft 6. The coupling mechanism with which this releasable mounting of the driven reversing wheel 12 to the drive shaft 6 is obtained will be discussed later. The belt 16 of the middle conveyor can be moved independently of the outer conveyor belts when the driven reversing wheel 12 is released from drive shaft 6, since the other reversing wheel 14 of this middle conveyor T2 is free-turning. The apparatus can in this way be made suitable for transporting an article with a given length in the transporting direction.

The apparatus can further be made suitable for transporting an article with a given width in the direction transversely of the transporting direction using displacing elements V1, V2 or V3 coupled via mountings 20 to the supporting bodies 10. These displacing elements V1, V2 or V3 convert a rotation of the guides 19 into a linear movement of the respective conveyors T1, T2 or T3 in the direction of the guides 19. As a result of the differences in construction of the displacing elements V1, V2 and V3 of the respective conveyors T1, T2 or T3, the conveyor T1 placed closest to the frame 1 will not be displaced after rotation of the guides 19 through a given angle, the middle conveyor T2 will be displaced a certain distance after rotation of the guides 19 through the same angle, and the outer conveyor T3 will be displaced twice this distance along guides 19 after rotation of the guides 19 likewise through the same angle. In this manner the middle conveyor T2 will be placed at all times precisely in the middle between the two outer conveyors T1 and T3. Only displacing element V3 will be elucidated hereinbelow since both the other displacing elements V1 and V2 have a similar structure and operation.

In order to increase ease of operation and to ensure that both guides 19 rotate through the same angle when the width of the apparatus is adjusted, one guide 19 is directly rotated using a crank placed in the crank hole 27 and this rotation angle is transmitted exactly to the other guide 19 using an endless belt 28, which belt 28 co-acts with reversing wheels (not shown) fixed to guides 19, where these reversing wheels have an exactly equal diameter.

The mounting plates 13 are coupled adjustably to the supporting body 10, whereby the distance of each reversing wheel 14 in relation to supporting body 10 can be determined and the tension in each narrow endless conveyor belt 16 can be adjusted. This coupling will be further elucidated hereinbelow.

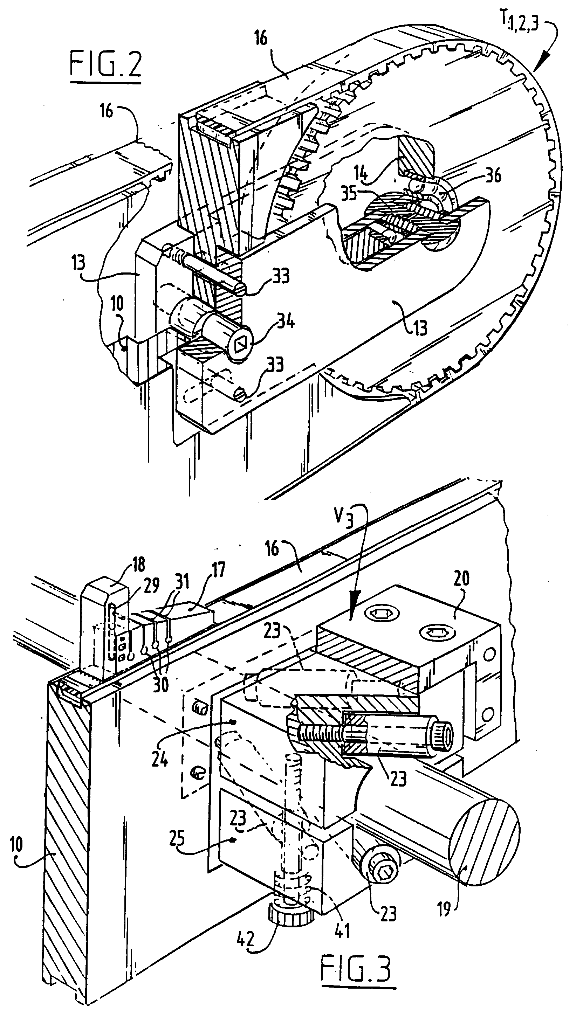

The adjustable mounting plates 13 shown in fig. 2 are mutually attached by means of a reversing wheel shaft 35, around which the reversing wheel 14 turns via a bearing 36. Plates 13 are further mutually connected by means of clamping screws 33 and a pin 34 freely rotatable in plates 13 and having an non-concentric thickening in the middle of the pin 34 with the width of the supporting body 10, wherein clamping screws 33 and pin 34 are arranged in through-holes in supporting body 10. By releasing the clamping screws 33 and turning the pin 34 the distance of the reversing wheel 14 to the supporting body 10, and therewith the tension in conveyor belt 16, can be adjusted. This setting is retained by re-tightening the clamping screws 33.

In the displacing element V3 shown in fig. 3 six rollers 23 are mounted rotatably using a shaft to the upper part 24 coupled to the mounting 20 and to the closing part 25. The latter has a through-hole through which is arranged a lock screw 42, with which closing part 25 is coupled to upper part 24. A spring 41 is placed round bolt 42 against closing part 25. The closing part 25 and upper part 24 enclose guide 19 and the rollers 23 are therefore pressed onto guide 19 between upper part 24 and closing part 25 with a force generated mainly by the spring 41. The rotation axis of each roller 23 encloses an angle with the centre line of guide 19, which angle is equal for each roller 21, 22 or 23 of each displacing element V1, V2 or V3 associated with one conveyor T1, T2 or T3 respectively, whereby due to the rolling of the rollers 21, 22 or 23 over guide 19 the displacing elements V1, V2 or V3 of one conveyor T1, T2 or T3 convert the same angle of rotation of both guides 19 into the same displacement distance along the guides 19.

The direction of the rotation axis of the rollers 21 which form part of the conveyor T1 placed closest to the frame is the same as the direction of the centre line of the guides 19, as shown in fig. 1. This conveyor T1 will therefore remain in position when guides 19 are rotated. The rotation axis of each roller 22 of the middle conveyor T2 encloses a certain angle with the centre line of guide 19. In the shown embodiment of the invention this angle is 15°. The rotation axis of each roller 23 of the third conveyor T3 encloses an angle with the centre line of a guide 19 which is twice the angle of the rotation axis of each roller 22 of the middle conveyor T2. In this embodiment according to the invention this angle is therefore to 30°. As a result of this relation between the angles of the rotation axes of the rollers 21, 22 and 23 for the different conveyors T1, T2 and T3 to the centre line of guides 19 the middle conveyor T2 will at all times be situated in the middle between both adjacent conveyors T1 and T3.

A leg 17 is vulcanised to the narrow endless conveyor belt 16 shown in fig. 3, wherein a protrusion 18 is fixed to leg 17 with a pin 29. Leg 17 ensures sufficient sturdiness of the protrusion 18 when this latter pushes forward or clamps an article to be transported. Notches 31 are arranged in the leg 17 from the upper surface in the direction of conveyor belt 16, which notches 31 each debouch into a through-hole 30 in leg 17 in the direction transversely of the transporting direction. As a consequence the L-shaped bodies formed by a leg 17 and a protrusion 18 are sufficiently flexible to make the turn around the reversing wheels 11,12 or 14 without damaging conveyor belt 16 or leg 17 or the connection of leg 17 to the conveyor belt.

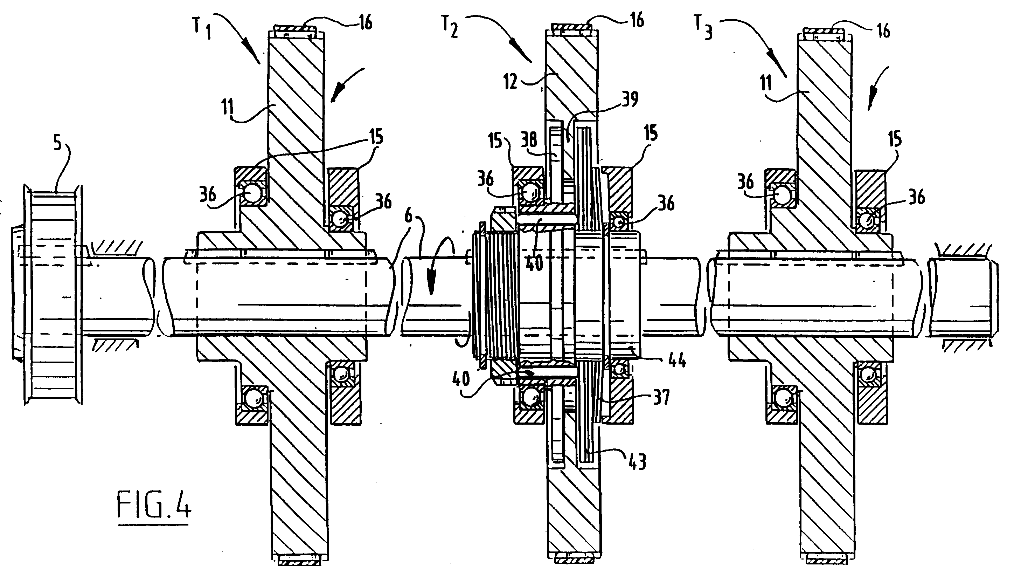

In the side view shown in fig. 4 of the drive shaft 6 in the apparatus according to fig. 1 is shown an embodiment of a coupling mechanism for releasing the reversing wheel 12 of the middle conveyor T2 from the drive shaft 6.

In this embodiment of the invention the drive shaft 6 is formed by a key way and the drive wheels 11 enclose this key way and co-act therewith to move the conveyor belts 16 forward.

The conveyor belts 16 forming part of the outer conveyors T1 and T3 cannot be released from the drive. The reversing wheels 11 of these conveyors T1 and T3 are coupled non-releasably to the drive shaft 6 and rotate in the fixed mounting plates 15 over bearings 36 placed between the fixed mounting plates 15 and reversing wheels 11.

The reversing wheel 12 forming part of the middle conveyor T2 has an intermediate wheel 39, which wheel 39 is pressed by a friction ring 43 against a clamping ring 38 by a conical spring 37. Clamping ring 38 is fixed to a sleeve 44 round drive shaft 6 co-acting with drive shaft 6, where two pins 40 are arranged to the friction ring 43 in lengthwise direction of drive shaft 6.

By the force with which the intermediate wheel 39 is clamped between clamping ring 38 and friction ring 43 a sufficiently strong coupling of the reversing wheel 12 to the sleeve 44 round drive shaft 6 is obtained to cause the conveyor belt 16 to move round.

Using the pins 40 the friction ring 43 and therefore the conical spring 37 can be moved in sideward direction away from the intermediate wheel 39. The clamp coupling between reversing wheel 12 and the sleeve 44 coupled to drive shaft 6 is hereby discontinued and the conveyor belt 16 of the middle conveyor T2 can move round independently of the conveyor belts 16 of both the outer conveyors T1 and T3, whereby it is possible to pre-adjust the apparatus to the size in the transporting direction of the articles to be transported.

## Claims

1. Apparatus for consequently transporting articles of predetermined dimensions, said apparatus comprising:
- a frame (1) with at least two guides (19), at least one of which is rotatable;
- at least two conveyors (T1, T2, T3), each comprising:
* an endless belt element (16);
* at least two reversing wheels (11, 12; 14), the parallel rotation axes of which coincide for the conveyors; and
* a body (10) supporting the upper part of the belt element, wherein at least one supporting body of said at least two conveyors is connected by means of displacing elements (V1, V2, V3) to said rotatable guide arranged parallel to the rotation axes of said reversing wheels to displace at least one of said at least two conveyors transversely of the transporting direction of said belt element upon rotation of said guide, and
- drive means for said belt elements (2-5) and for said rotatable guide (27),
**characterized in that**
said guide (19) is rod-like and arranged for driving thereof to rotate, and that each displacement element (V1, V2, V3) comprises a housing (24, 25) for at least two rollers (23), said rollers each being arranged to roll over said guide upon rotation thereof, where a displacement along said guide resulting from said rotation is predetermined by the angle between rotation axes of rollers of one of said conveyors and a rotation axis of said guide.

2. Apparatus as claimed in claim 1, **characterized in that** the angle enclosed by said rotation axis of each roller of said displacing elements of one of said conveyors and the centre line of said guides varies by a factor of two from that of an adjacent conveyor.

3. Apparatus as claimed in claims 1 and 2, **characterized in that** said guides are supported in the frame at least at one end.

4. Apparatus as claimed in claims 1-3, **characterized in that** said belt element of at least one conveyor has bodies in the form of protrusions engaging the leading side of said articles to be transported and the belt element of each of the at least two other conveyors has protrusion-like bodies engaging the trailing side of said articles to be transported.

5. Apparatus as claimed in claims 1-4, **characterized in that** said belt elements having protrusion-like bodies engaging said trailing side of said articles to be transported or said belt elements having protrusion-like bodies engaging said leading side of said articles to be transported are adjustably in said transporting direction coupled to the drive.

6. Apparatus as claimed in claims 1-5, **characterized in that** said protrusion-like bodies engaging said articles to be transported are vulcanized onto said belt elements.

7. Apparatus as claimed in claims 1-6, **characterized in that** each substantially L-shaped body engaging said article to be transported has notches in the leg fixed to said belt element.

8. Apparatus as claimed in claims 1-7, **characterized in that** a layer of wear-resistant material is arranged over the surface of said belt element running over said reversing wheels and said supporting body.

## Patentansprüche

1. Vorrichtung zum aufeinanderfolgenden Fördern von Gegenständen vorbestimmter Dimensionen, wobei die Vorrichtung folgende Teile umfaßt:
- einen Rahmen (1) mit wenigstens zwei Führungen (19), von denen wenigstens eine drehbar ist;
- wenigstens zwei Fördervorrichtungen (T1, T2, T3), von denen jede folgende Teile aufweist:
* ein endloses Riemenelement (16);
* wenigstens zwei Umkehrräder (11, 12; 14), deren parallele Drehachsen für die Fördervorrichtung zusammenfallen; und
* einen Körper (10), der den oberen Teil des Riemenelementes trägt, wobei wenigstens ein Tragkörper von den wenigstens zwei Fördervorrichtungen mittels Verlagerungselementen (V1, V2, V3) mit der drehbaren Führung verbunden sind, die parallel zu den Drehachsen der Umkehrräder verläuft, um wenigstens eine der wenigstens zwei Fördervorrichtungen quer zur Transportrichtung des Riemenelementes bei Drehung der Führung zu versetzen, und
- Antriebsmittel für die Riemenelemente (2 bis 5) und für die drehbare Führung (27),
dadurch gekennzeichnet, daß die Führung (19) stabartig ausgebildet und drehbar angetrieben ist und daß jedes Verlagerungselement (V1, V2, V3) ein Gehäuse (24, 25) für wenigstens zwei Rollen (23) aufweist und daß jede Rolle über die Führung bei Drehung derselben abläuft, wobei eine Versetzung längs der Führung, die aus der Drehung heraus resultiert, durch einen Winkel vorbestimmt ist, der zwischen den Drehachsen der Rollen einer Fördervorrichtung und einer Drehachse der Führung ausgespannt ist.

2. Vorrichtung nach Anspruch 1,
dadurch gekennzeichnet, daß der von der Drehachse jeder Rolle der Verlagerungselemente einer der Fördervorrichtungen und der Mittellinie der Führungen eingeschlossene Winkel sich um einen Faktor von zwei von jenem einer benachbarten Fördervorrichtung unterscheidet.

3. Vorrichtung nach den Ansprüchen 1 und 2,
dadurch gekennzeichnet, daß die Führungen an wenigstens einem Ende im Rahmen abgestützt sind.

4. Vorrichtung nach den Ansprüchen 1 bis 3,
dadurch gekennzeichnet, daß das Riemenelement wenigstens einer Fördervorrichtung Körper in Gestalt von Vorsprüngen aufweist, die an der Vorderseite des zu transportierenden Gegenstandes angreifen und das Riemenelement eines jeden der wenigstens zwei anderen Fördervorrichtungen vorsprungartige Körper aufweist, die an der Hinterseite der zu transportierenden Gegenstände angreifen.

5. Vorrichtung nach Anspruch 4,
dadurch gekennzeichnet, daß die Riemenelemente vorsprungartige Körper aufweisen, die an der Hinterseite der zu transportierenden Gegenstände angreifen oder daß die Riemenelemente vorsprungartige Körper besitzen, die an der Vorderseite der zu transportierenden Gegenstände angreifen und daß diese Vorsprünge in Transportrichtung mit dem Antrieb kuppelbar sind.

6. Vorrichtung nach den Ansprüchen 1 bis 5,
dadurch gekennzeichnet, daß die vorsprungartigen Körper, die an den zu transportierenden Gegenständen angreifen, auf den Riemenelementen aufvulkanisiert sind.

7. Vorrichtung nach den Ansprüchen 1 bis 6,
dadurch gekennzeichnet, daß jeder im wesentlichen L-förmig gestaltete Körper, der an dem zu transportierenden Gegenstand angreift, in dem am Riemenelement festgelegten Schenkel Einschnitte aufweist.

8. Vorrichtung nach Anspruch 1,
dadurch gekennzeichnet, daß eine Schicht aus abriebfestem Material über der Oberfläche des Riemenelementes angeordnet ist, die über die Umkehrräder und den Tragkörper läuft.

## Revendications

1. Appareil pour transporter des articles de dimensions prédéterminées, ledit appareil comprenant :
- une structure (1) avec au moins deux guides (19), dont un au moins est rotatif ;
- au moins deux convoyeurs (T1, T2, T3) comprenant chacun :
* un élément de courroie sans fin (16) ;
* au moins deux poulies réversibles (11, 12 ; 14), dont les axes de rotation parallèles coïncident pour les différents convoyeurs ; et
* un bâti (10) supportant la partie supérieure de l'élément de courroie, dans lequel un au moins des bâtis supports desdits deux convoyeurs au moins est relié par des éléments de déplacement (V1, V2, V3) audit guide rotatif agencé parallèle aux axes de rotation desdites poulies réversibles pour déplacer au moins un desdits deux convoyeurs transversalement par rapport à la direction de transport dudit élément de courroie sous l'effet de la rotation dudit guide, et
- des moyens d'entraînement desdits éléments de courroie (2-5) et dudit guide rotatif (27),
caractérisé en ce que
ledit guide (19) a la forme d'une tige et se trouve agencé pour pouvoir être entraîné en rotation, et en ce que chaque élément de déplacement (V1, V2, V3) comprend un boîtier (24, 25) pour au moins deux galets (23), lesdits galets étant agencés pour que chacun roule sous l'effet de la rotation dudit guide, grâce à quoi un déplacement le long dudit guide résultant de ladite rotation est prédéterminé par l'angle entre les axes de rotation des galets de l'un desdits convoyeurs et un axe de rotation dudit guide.

2. Appareil selon la revendication 1, caractérisé en ce que l'angle entre ledit axe de rotation de chaque galet desdits éléments de déplacement de l'un desdits convoyeurs et l'axe central desdits guides varie dans un rapport de deux par rapport à celui d'un convoyeur adjacent.

3. Appareil selon la revendication 1 ou 2, caractérisé en ce que lesdits guides sont supportés dans la structure au moins à une extrémité.

4. Appareil selon l'une des revendications 1-3, caractérisé en ce que ledit élément de courroie d'un convoyeur au moins a des pièces en forme de protubérances venant en prise avec le côté avant desdits articles à transporter, et en ce que l'élément de courroie de chacun des deux autres convoyeurs au moins a des pièces en forme de protubérances venant en prise avec le côté arrière desdits articles à transporter.

5. Appareil selon l'une des revendications 1-4, caractérisé en ce que lesdits éléments de courroies ayant des pièces en forme de protubérances venant en prise avec le côté arrière desdits articles à transporter ou lesdits éléments de courroie ayant des pièces en forme de protubérances venant en prise avec le côté avant desdits articles à transporter sont couplés de manière ajustable avec l'entraînement dans ladite direction de transport.

6. Appareil selon l'une des revendications 1-5, caractérisé en ce que lesdites pièces en forme de protubérances venant en prise avec lesdits articles à transporter sont vulcanisées sur lesdits éléments de courroies.

7. Appareil selon l'une des revendications 1-6, caractérisé en ce que chaque pièce sensiblement en forme de L venant en prise avec ledit article à transporter présente des encoches dans le montant fixé audit élément de courroie.

8. Appareil selon l'une des revendications 1-7, caractérisé en ce qu'une couche de matière résistante a l'usure est disposée sur la surface dudit élément de courroie passant sur lesdites poulies réversibles et sur ledit bâti support.
